# EUROPEAN PATENT SPECIFICATION

(11) **EP 3 192 040 B1**
(45) Date of publication and mention of the grant of the patent: **08.01.2020**
(21) Application number: 15839936.0
(22) Date of filing: 10.09.2015
(51) Int. Cl.: H04W 4/021, G06Q 30/02, G06Q 50/16

(54) **SYSTEMS AND METHODOLOGIES FOR VALIDATING THE CORRESPONDENCE BETWEEN AN IMAGE AND AN ASSET**
SYSTEME UND VORGEHENSWEISEN ZUR VALIDIERUNG DER KORRESPONDENZ ZWISCHEN EINEM BILD UND EINEM VERMÖGENSWERT
SYSTÈMES ET MÉTHODOLOGIES DE VALIDATION DE LA CORRESPONDANCE ENTRE UNE IMAGE ET UN ACTIF

(30) Priority: 10.09.2014 US 201462048506 P
(43) Date of publication of application: 19.07.2017
(73) Proprietor: Gauglitz, Wolfram, K., Dallas, TX 75214 (US)
(72) Inventor: Gauglitz, Wolfram, K., Dallas, TX 75214 (US)
(74) Representative: Knöner, Gregor
(86) International application number: PCT/US2015/049488
(87) International publication number: WO 2016/040680

(56) References cited:
- US-A1- 2009 006 185
- US-A1- 2009 006 185
- US-A1- 2009 171 822
- US-A1- 2011 143 776
- US-A1- 2012 202 515
- US-A1- 2014 121 957

## Description

### FIELD OF THE DISCLOSURE

The present disclosure relates generally to image verification, and more particularly to systems and methodologies for validating the correspondence between an image and an asset.

### BACKGROUND OF THE DISCLOSURE

Establishing the fair market value of assets, such as real estate, is an important aspect of various transactions, including the purchase or sale of property, financing (including mortgages and refinancing), and insurance. Typically, this process involves first identifying other properties whose fair market value has been established (often through recent sales), and which are considered to be comparable to the property being evaluated. These so-called "comparables" may then be utilized to infer the fair market value of the property under consideration.

Whether a given property is a "comparable" to a property being evaluated is frequently subject to interpretation. However, in the context of real estate appraisals, an appraiser typically looks for properties in the same geographic area which have been the subject of recent sales (typically within 3-6 months of the date of the appraisal). In order to lend some level of transparency to the procedure, the file associated with an appraisal will typically include images of the property that is the subject of the appraisal, as well as images of the comparable properties that were used as a basis for the appraisal. Consequently, a party wishing to use the appraisal or to verify its accuracy can use these images to understand the basis for the appraised value, and to identify issues that might call into question the accuracy of the appraisal.

By way of example, such images may indicate that one or more of the comparables is of clearly higher quality than the subject property (for example, a comparable may have a stone exterior, while the subject property has vinyl siding), which could suggest that the appraised value of the subject property may be overly generous. Similarly, these images may reveal the presence of recent water damage to the subject property, which may need to be accounted for in the appraised value.

The document US 2011/0143776 A1 describes a mobile participation platform that enables a network operator to solicit response data related to a specific event. The network operator sends requests to contribute data to mobile device users that meet predefined qualifications, such as presence at a specific location.

The document US 2009/0171822 A1 describes a method for image based valuation in which an image of a subject property is captured and the captured image is used to determine a value of the subject property. An image data service may provide the images and may further provide metadata related to the respective property.

### BRIEF DESCRIPTION OF THE DRAWINGS

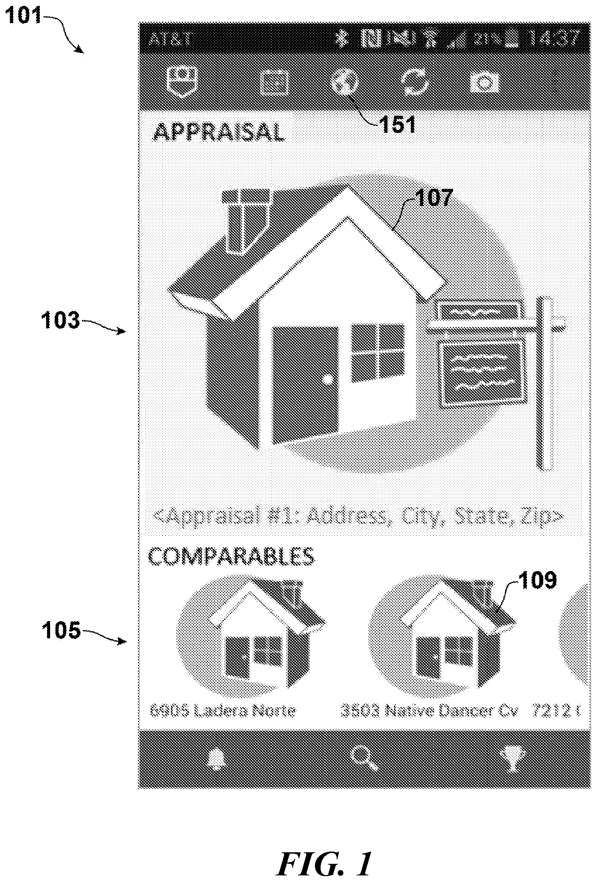

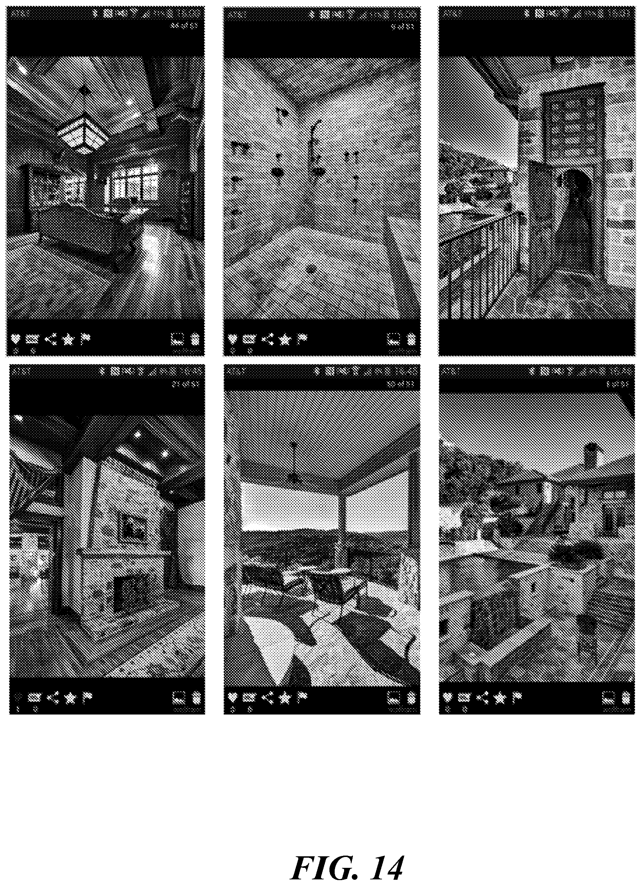

FIGs. 1-14 are screenshots from a particular, non-limiting embodiment of a software application in accordance with the teachings herein.

### SUMMARY OF THE DISCLOSURE

The invention is defined in the independent claim. The dependent claims describe embodiments of the invention.

In one aspect, a method for performing an appraisal on an asset is provided. The method comprises (a) providing software, installed on a mobile technology platform associated with a user, which includes image capture and location awareness functionalities; (b) obtaining a set of comparable assets to be used as a basis for establishing the appraisal value of the asset; (c) repeating, until *n* images have been captured, where *n* ≥ 1, the steps of (i) receiving, from the user, a request to capture an image with the software of a target asset selected from the group consisting of the asset and the comparable assets, (ii) determining the current location of the user with respect to a geofence associated with the target asset, and (iii) if the user is within a distance *d* of the target asset or is within a geofence associated with the target asset, then capturing the image, and otherwise denying the request; and (d) using the *n* images to determine an appraisal value of the asset.

In another aspect, a method is provided for capturing images of an asset. The method comprises (a) providing software, installed on a mobile technology platform associated with a user, which includes image capturing and location awareness functionalities; (b) receiving, from the user, a request to capture an image of the asset using the software; (c) determining the current location of the user with respect to a geofence associated with the asset; and (d) if the user is within a distance *d* of the asset or is within a geofence associated with the asset, then granting the request, and otherwise denying the request.

In a further aspect, a method is provided for validating images used to assess the value of an asset. The method comprises (a) obtaining an image of each of a plurality of comparable assets, wherein each image has a dataset associated therewith which includes locative data specifying the location of the comparable asset; (b) determining the physical location of each of the plurality of comparable assets by ascertaining the geospatial coordinates of an address associated with each of the plurality of comparable assets; (c) for each of the plurality of comparable assets, comparing the determined location of the comparable asset to the locative data specified for the comparable asset in the associated dataset; and (d) if the determined location of the comparable asset is within a predefined distance of the location specified for the comparable asset in the associated dataset, then marking the image of the comparable asset as validated, and otherwise flagging the image of the comparable asset as being potentially invalid.

In still another aspect, a method is provided for validating an image as corresponding to an asset. The method comprises (a) obtaining an image for each member of a set of *N* assets, where *N* ≥ 1, and wherein, for the *k*^{th} asset, where *k* ε *N,* the image of the *k*^{th} asset has a *k*^{th} dataset associated therewith which includes locative data specifying the location of the *k*^{th} asset; and (b) for at least one asset *A*ᵢ ε {*A*₁, ..., *A*_{N}}, validating the image of the asset by (i) determining the location of the *i*^{th} asset by ascertaining the geospatial coordinates of a physical address associated with the *i*^{th} asset, (ii) comparing the determined location of said *i*^{th} asset to the locative data specified for the *i*^{th} asset in the *i*^{th} dataset, and (iii) if the determined location of the *i*^{th} asset is within a predefined distance of the location specified for the *i*^{th} asset in the *i*^{th} dataset, then marking the image of the *i*^{th} asset as validated, and otherwise flagging the image as being potentially invalid.

In yet another aspect, a method is provided for validating an image as corresponding to an asset. The method comprises (a) obtaining an image of a first asset having a first dataset associated therewith, said first dataset including locative data which specifies the location of the first asset; (b) determining the location of the first asset by ascertaining the geospatial coordinates of a physical address associated with the first asset; (c) comparing the determined location of said first asset to the locative data specified for the first asset in the first dataset; and (d) if the determined location of the first asset is within a predefined distance of the location specified for the first asset in the first dataset, then marking the image of the first asset as validated, and otherwise marking the image of the first asset as being potentially invalid.

In still another aspect, a method is provided for validating the images used to assess the value of an asset. The method comprises (a) obtaining a first image of an asset having a first dataset associated therewith, said first dataset including locative data which specifies the location of the asset; (b) obtaining a second image of a comparable asset having a second dataset associated therewith, said second dataset including locative data which specifies the location of the comparable asset; (c) determining the location of a subject asset by ascertaining the geospatial coordinates of a physical address associated with the subject asset, wherein the subject asset is selected from the group consisting of said asset and said comparable asset; (d) comparing the determined location of said subject asset to the locative data specified for the subject asset in the first or second datasets; (e) if the determined location of the subject asset is within a predefined distance of the location specified for the subject asset in the first or second datasets, then marking the image of the subject asset as validated, and otherwise marking the image of the as being potentially invalid.

In another aspect, a tangible, non-transient medium is provided which contains suitable programming instructions which, when executed by one or more computer processors, executes or implements any of the foregoing methods.

### DETAILED DESCRIPTION

Although systems and methodologies for conducting appraisals are well known and have been used for some time, many of these systems and methodologies are susceptible to human error or fraud. These issues are especially problematic when the appraisal will be relied upon for insurance purposes, since in this context, such errors or fraud can quickly lead to significant losses on the part of the insurance company or its underwriters.

For example, an insurance company may wish to grant an insurance policy to a property owner to protect the owner against loss or damage to the property (e.g., by covering replacement costs), or to protect the investment of the owner in the event that the market value of the property declines between the time the property is purchased and the time the property is sold. In either case, the fair market value of the property is typically crucial to establishing the risk that the insurer is undertaking, and hence is commonly utilized as an important consideration in structuring the insurance policy and in determining the associated premium.

However, it is frequently the case that the insurance company will not have a local presence in the area in which the property resides. Consequently, the insurance company may have to rely on one or more local agents in order to obtain images of the subject property and to identify reasonable comparables that may be utilized to ascertain the fair market value of the property to be insured.

Through human error, fraud or incompetence, the images provided by the local agent for this purpose may not correspond to the properties they purport to correspond to. For example, an image presented as corresponding to a property at a given address may actually be an image of a different property, or the images may be out of date (that is, they may not represent the current condition of the subject property and/or one or more of the comparables). Since the insurance company is not itself local to the property in question, it is at a disadvantage in being able to identify such discrepancies. This may result in inaccurate appraisal values or an incomplete understanding of the risks being assumed, which may cause the insurer to incur heavy losses in the transaction.

A further shortcoming of the manner in which appraisals are currently conducted has to do with file management. In a typical appraisal, it is desirable for the appraiser to take several pictures of the subject property and of each comparable. Having multiple pictures is useful to obtaining a clear understanding of any significant features that may positively or negatively affect the value of the subject property or its comparables. Consequently, on a given day, an appraiser may capture a large number of images for use in preparing multiple appraisals.

However, the large number of images commonly captured by an appraiser presents significant file management issues. In particular, each of these images must be properly associated with the property to which they correspond. This may involve the time consuming process of transferring the images from an imaging device (such as a camera or mobile phone) to one or more files on a computer, and then uploading the images to a site associated with an appraisal company or a client thereof. During this process, images may be lost, corrupted or misfiled. This process must be repeated each time additional images for a property are captured.

There is thus a need in the art for systems and methodologies of validating the correspondence between an image and an asset. In particular, there is a need in the art for systems and methodologies which ascertain that the images associated with a property or its comparables are recent, and are actually of the property they purport to be of. There is also a need in the art for systems and methodologies of capturing images of assets, or for processing the captured images, that efficiently catalog the captured images such that the images are grouped by location (e.g., such that all images of an asset at a particular location are grouped together, regardless of the sequence in which the images were captured or the specific time at which they were captured), and makes the images readily available to any parties of interest. These and other needs may be met with the systems and methodologies described herein.

It has now been found that the foregoing needs may be met by the systems and methodologies disclosed herein. In a preferred embodiment, these systems and methodologies leverage a software program that validates the correspondence between an image and an asset, either by establishing that correspondence at the time of image capture and then maintaining it, or by verifying the correspondence for previously captured images. The software program may take the form of an application installed on a mobile technology platform that is associated with a party who is responsible for capturing images of an asset (or of asset comparables), and/or as a distributed application with a server component that interfaces with each of a plurality of local instances of a client component installed on each of a plurality of mobile technology platforms.

The software may utilize its own location awareness capabilities, or those of a host device (such as, for example, GPS tracking or cell tower triangulation algorithms available on most mobile technology platforms), to record the location and time at which an image was captured, and/or to control the image capture process. For example, in some embodiments, the software may prevent image capture, or may prevent the association of an image with a target asset (which will typically be an asset or one of its comparables), until the software detects that the user is within a certain proximity to the target asset which is to be associated with the image, or determines after the fact that the user was within such proximity at the time of image capture. In some embodiments, such proximity may be assessed based on the user's location (or more specifically, the location of a mobile technology platform associated with the user) with respect to one or more geofences defined around the target asset.

In some embodiments, the software may also be equipped with an override function that allows a user to take an image outside of a geofence (or outside of a specified distance from a geofence), or to otherwise associate an image with an asset or target in situations where the software would not otherwise make such an association. For example, a user may wish to take an image of a property from a significant distance away to show, for example, that the property is nestled at the foot of a mountain. However, the images will preferably be flagged in such situations so that the association can be readily reviewed by any interested parties so that the validity of the association may be readily ascertained.

An image captured in accordance with the foregoing process may be tagged (preferably during capture, although in some instances, the tagging may occur at a later time) with the recorded locative and/or temporal data as, for example, by recording this information in the metadata associated with the image. The software may then use this data to sort the captured images as, for example, by placing images with the same or similar locative data in a folder associated with a target asset residing at that location (e.g., "4512 Court of St. James"). As a result of the foregoing, any human error or fraud which might otherwise be involved in creating an association between an image and the time or location at which it was captured may be reduced or eliminated.

In some embodiments, the software may be provided with suitable intelligence to make default associations. For example, the software may recognize that an image has been captured at a location or geofence which already has at least one image associated with it. In such cases, the software may automatically associate the captured image with the existing location or geofence, possibly subject to an override option presented to the user (for example, the user may be queried to confirm the proposed association, or the proposed association may be indicated through a suitable visual cue so that the user is alerted to it and can change the association, if need be). The software will also preferably be equipped with suitable intelligence to recognize that the user has not left a location or geofence, and will thus preferably continue to associate captured images with the location or geofence until the user has exited that location or geofence, or has instructed the software to make a different association.

In some embodiments, when an image has already been associated with a target asset, the software may verify that association by comparing a first set of locative and/or temporal data associated with the image with a second set of locative and/or temporal data associated with the purported location of the target asset. The locative data in the second set of data may be obtained, for example, by determining the GPS coordinates of the physical address of the property which is purportedly shown in the image or by utilizing other suitable location determining means. If the locative data from the first and second sets do not agree within a specified level of variance (or, in some embodiments, if the locative data from the first and second sets do not fall within the same geofence), then the image may be flagged as not corresponding to the property at the given address, or as requiring verification of the purported location at which the image was captured. Similarly, if the temporal data in the first and second data sets does not agree within a specified level of variance (e.g., 1 week, 1 month, 3 months, 6 months, a year, or some other suitable time interval or level of variance), then the image may be flagged as not being sufficiently recent, or as requiring verification of the purported time at which the image was captured.

The systems and methodologies disclosed herein may be further understood with reference to the following particular, non-limiting example. In this example, a software client is provided in the form of a mobile application installed on a mobile technology platform associated with a user, and is used in conducting an appraisal on real estate. However, one skilled in the art will appreciate that a software system of this type may take various forms, and that the software and associated systems and methodologies may be readily applied to various other types of other assets. Thus, for example, these systems and methodologies may be applied to various types of real estate, personal property and chattel including, without limitation, commercial and residential real estate, buildings or property; vehicles such as, for example, automobiles, trucks, motorcycles and watercraft (including, for example, boats and jet skis); valuables (including, for example, paintings, coin or stamp collections and historical artifacts); and the like.

FIG. 1 depicts the main screen **101** rendered by the software upon launch. As seen therein, the screen **101** in this embodiment includes an 'Appraisal' section **103** and a 'Comparables' section **105** as the two main viewable areas. The 'Appraisal' section **103** includes an icon **107** (or placeholder image) of the property for which the home appraisal is being conducted, and the "Comparables" section **105** includes icons **109** or placeholder images of each of the comparables that are to be used as the basis for the appraisal.

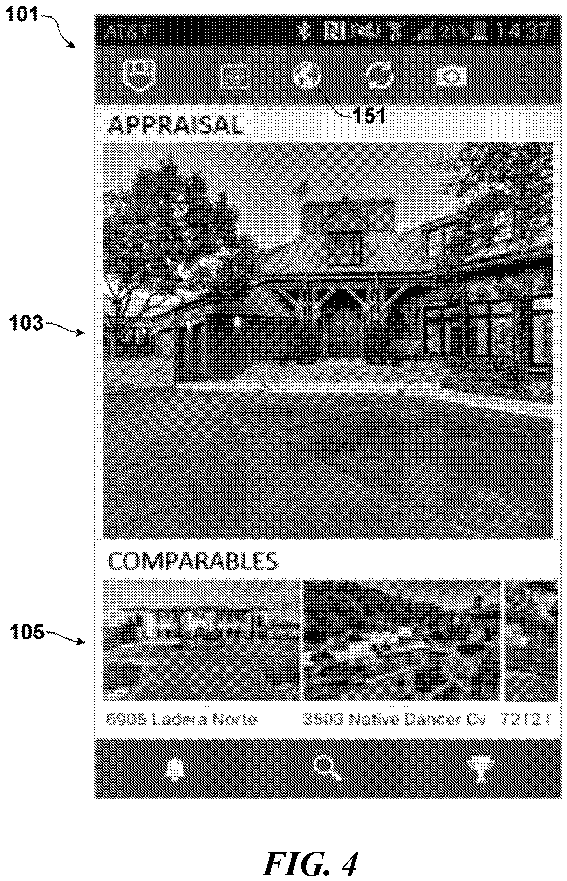

As images are captured with the software described herein (the image capture process is described in greater detail below), the icons **107**, **109** or placeholder images are preferably replaced with actual images (or thumbnail versions thereof) of the corresponding properties. Similarly, if images of the property or one or more of its comparables already exist, the icons **107**, **109** or placeholder images may be prepopulated with those images (or thumbnail versions thereof). FIG. 4 provides an example of how the screen of FIG. 1 might appear after it has been populated with images of actual properties in the foregoing manner.

As seen in FIG. 4, each property is associated with a number (preferably three to five) of comparables **109**, images and addresses of which are listed in the "Comparables' section **105.** In the particular embodiment depicted in FIG. 4, the comparables in the "Comparables' section **105** are listed in a thumbnail strip which is scrollable to the left or right, and the image folder for each of the comparables (which contains all of the captured images of that comparable) is accessible by selecting the corresponding image of the comparable in the "Comparables' section **105.** In this or other embodiments, the comparables may also be accessible via hyperlinks, menus, through keystroke commands, or by other suitable means.

The address fields in the "Comparables' section **105** may be populated in various ways. For example, the addresses of the comparables may have been preselected by a third-party (in which case the address may already appear beneath the house icon before any images have been captured), or the appraiser may select or specify an address for the property in this field, based on the appraiser's knowledge of the local market for the property. Preferably, whenever the property is loaded that is the subject of the appraisal, the comparables associated with that property load alongside it.

If the comparables have not been pre-loaded, then the appraiser may select one of the icons **109** in the "Comparables" section **105** in order to take a photo. In the particular embodiment depicted, there are five such icons **109**, although various embodiments may allow a user to specify the number of comparables to be utilized (either for a specific appraisal or as a general setting). It will, of course, be appreciated that the systems and methodologies disclosed herein are not limited to any particular number of comparables, and may thus allow for the use of virtually any number of comparables.

Various means may be utilized to capture images or to populate the pages of the software with images, some of which are described in greater detail below. Preferably, however, the software described herein is equipped with imaging functionalities that are configured so that they may only be activated or utilized when a user is within a predetermined proximity of the property to be imaged, or is within a geofence associated with that property. In an especially preferred embodiment, the appraiser must be within the active geofence of the property in question or within a given distance of that geofence in order to associate photos with that particular property. When these imaging functionalities are utilized, the captured images are stored in folders associated with each property, and the screen depicted in FIG. 1 is populated with samples of the captured images.

Various means may be utilized with the systems and methodologies disclosed herein to assign an appraiser to an appraisal project. For example, in some embodiments, sets of homes may be pre-loaded or periodically uploaded to a given appraiser's account (and hence to the software client or instance of the software application which is associated with the appraiser or the appraiser's mobile technology platform), and the appraiser may then conduct appraisals on these homes over a certain period of time. For example, these homes may be assigned to the appraiser by a business entity with which the appraiser is associated (e.g., as an employee or independent contractor). In some embodiments, a deadline may be specified by which the appraiser is required to have completed, or at least started, the appraisal, and the appraisal project may be assigned to another appraiser if this deadline is not met.

Alternatively or in addition, an automatic feed may be utilized which fetches addresses of properties in real-time from a service that caters to users or entities interested in obtaining appraisals of properties, and/or to appraisers interested in conducting appraisals. The service may be available, for example, on a subscription basis to the users and/or appraisers. After a user specifies an address for an asset (or otherwise provides information from which such an address may be ascertained), a suitable appraiser may be selected to conduct the appraisal on the asset based on various criteria. For example, a suitable appraiser may be selected based on the appraiser's proximity to the property for which an appraisal has been requested, or based on the workload of an appraiser (e.g., how busy the appraiser is, in order to facilitate a faster response time), or based on the expertise or experience of a given appraiser with assets of the type for which an appraisal is being sought. If proximity is utilized as a criteria for selecting an appraiser for an appraisal project, such proximity may be determined from the appraiser's business address or region, or by echoing back the geo-locations of appraisers to an appraisal service for this purpose.

In some embodiments (and possibly for an up-charge), an appraiser who subscribes to an appraisal service or is an employee or independent contractor working for the company operating the service, may designate a particular geographic region the appraiser is interested in working in or is licensed or authorized to work in. The service may then preferentially pair the appraiser up with assets in this particular area/location. Similarly, an appraiser who subscribes to the service may designate a particular asset type which the appraiser is interested in working with or is licensed or authorized to work with (in the context of the present example, the asset type could be, for example, a particular type of house, a price range, or a set of neighborhoods). The service may then preferentially pair the appraiser with assets of the particular type specified.

In a typical appraisal, significantly more images will be captured of the property being appraised than of any of its comparables. However, the systems and methodologies disclosed herein may provide the ability to take capture as many images as is necessary or desirable for either the target asset or its comparables. The systems and methodologies disclosed herein may also provide the ability to sort or prioritize the images for viewing, to use as representative images, or for other purposes.

In a preferred embodiment, as soon as a captured image is uploaded, the service will perform an address look-up based on GPS information or on other captured locative data, and will suggest one or more addresses for the home appraiser to choose from. If the service is not able to ascertain a street address to associate with a comparable, or if the actual address is not offered as a choice, the user may be afforded the option of manually entering such information in an address field. The GPS location information or other locative data is preferably still associated with this manual entry, although it may be flagged for possible third-party review or later reference. This locative information is preferably recorded in the metadata associated with the captured image.

In a preferred embodiment of the software, once an appraiser begins an appraisal, the appraisal must be completed before another appraisal can be started. If an appraiser has to cancel the appraisal for any reason, the appraiser may forego any revenue associated with the appraisal, and the appraisal request may be returned to the top of the queue for assignment to another appraiser. In the event of cancellation, the appraiser will preferably be prompted to provide a reason for the discontinuation of the appraisal, and these reasons may be tracked (e.g., for quality control or fraud prevention purposes).

The foregoing notwithstanding, some embodiments of the systems and methodologies disclosed herein may allow appraisals to be accomplished in a piecemeal fashion so that, for example, target properties may be imaged based on their proximity to each other, rather than the appraisal they relate to. In such embodiments, the software will preferably sort the captured images into appropriate files so that they are associated with the proper appraisal project, or will mark them appropriately so that such an association may be made later if desired.

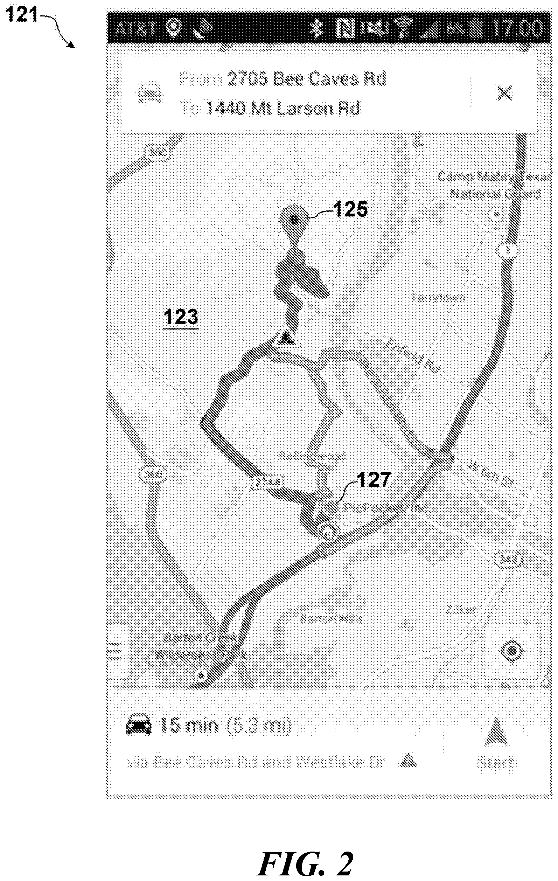

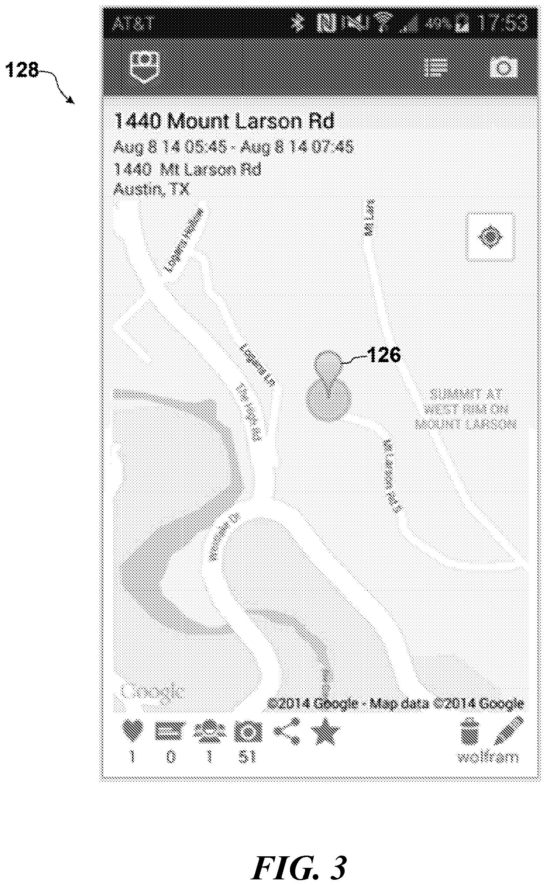

When an image of a property being appraised has been pre-loaded, selection of the associated for-sale icon in FIG. 1 launches the screen **121** depicted in FIG. 2. This screen **121** includes a map **123** having a pin **125** thereon which indicates the location of the property. Selection of the property address (in the particular embodiment depicted, this address is "1440 Mount Larson Rd") preferably launches a script which displays directions from the appraiser's current location to the property in question. The map **123** preferably includes a bird's eye view of the property, and may be equipped with pinch or zoom functionalities (or similar or associated gestures, keys or keystrokes) to allow the user to shrink or enlarge (see FIG. 3) the view. In the particular embodiment depicted, if the user is in sufficiently close proximity to the property, their present location appears on the screen, and is designated by a dot **127** or other icon which is super-imposed on the map **123.**

As noted above, the software application is preferably equipped with suitable image capture functionalities to allow a user to capture images of a property, it being understood that the software application may also be equipped to capture videos, IR signatures, audio files, or other files, data types or media which may be associated with the property. However, these functionalities are preferably available only when the user is within the property's active geo-fence, and are preferably otherwise disabled. Hence, for example, the user's ability to associate images with a particular property may be limited to such times as the user is within the property's geofence.

In the preferred embodiment, as images are captured, they appear in real time over a network that the mobile technology platform is in communication with. Such a network may, for example, be the Internet, and the photos may appear in real time on a website. This website preferably has controlled access so that only authorized parties may view or access the images.

Preferably, as images are captured of a target asset (which may be a property being appraised or any of its comparables), the most recently captured image becomes the cover photo for the image folder associated with the target asset. This situation preferably persists unless and until the user designates a cover photo manually.

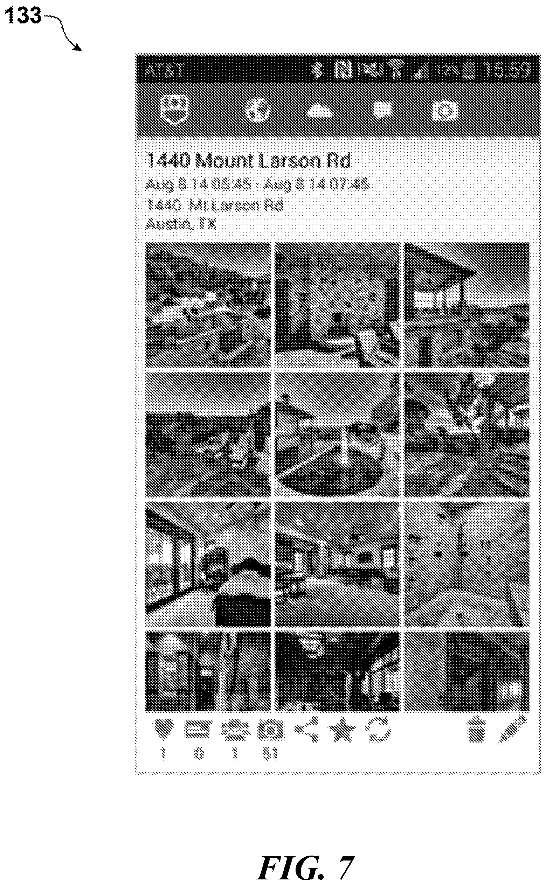

As seen in FIG. 7, in the particular embodiment depicted, the images in the image folder appear in a 3 x n array which is scrollable from top to bottom, and which spans all of the photos which have been associated with the target property. Preferably, selection of any individual photo by the user launches a full-screen "Gallery" mode, where any photo in the array may be commented on, shared, flagged, modified (for example, by adjusting exposure, saturation, or other features of the image), or subjected to other suitable actions. The Gallery mode also allows the user to set a cover photo for an image folder (e.g., by selecting the SetCoverPhoto icon within the "Gallery" view of the property).

After images are captured of the property which is the subject of an appraisal, returning to the home screen will display a large image of the property in place of the "home for sale" icon. As noted above, the user may change this image at any time by selecting a different image to be used as the cover from the image folder within the Gallery view.

The appraiser may now select one of the home icons in the "comparables" strip to begin taking photos of the comparable. If an address for each comparable has been pre-populated, the appraiser may click on the "home for sale" icon to see a birds' eye map view of the type shown in FIG 2 in order to navigate to the property or to determine whether the user has entered the property's active geofence. If the user is within the active geofence of the property, the user may begin capturing images of the property. As with the images of the property which is the subject of the appraisal, these images preferably upload in real time to the service.

After one or more images have been associated with a comparable, the "home" icon in the comparables section **105** on the main screen is replaced with a thumbnail version of one of the images just captured. Clicking on this thumbnail now displays all of the applicable property images in the same 3xn fashion as described earlier for the target home being appraised. A cover photo representative of the "comparable" property may also be selected and set by the user in the same manner described above for the property which is the target of the appraisal.

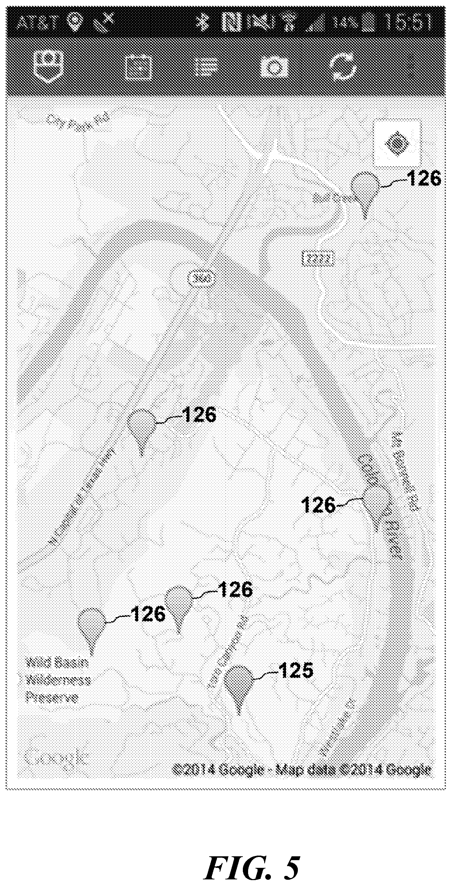

As noted above, FIG. 4 depicts an example of the screen of FIG. 1 after all of the image fields have been populated. Selection of the globe icon **151** in the header of FIG. 4 displays the map of FIG. 5. This map is zoomed out just enough to show, on a single screen, the location of the property being appraised and the location of each of the comparables. In the particular case depicted in FIG. 5, the home being appraised (marker **125**) and five comparables (markers **126**) are shown.

Selection of a comparable marker **126** launches a page **128** of the type depicted in FIG. 3 in which the comparable selected is centered on a map. The user may re-center the map or zoom in or out to provide a desired perspective of the comparable.

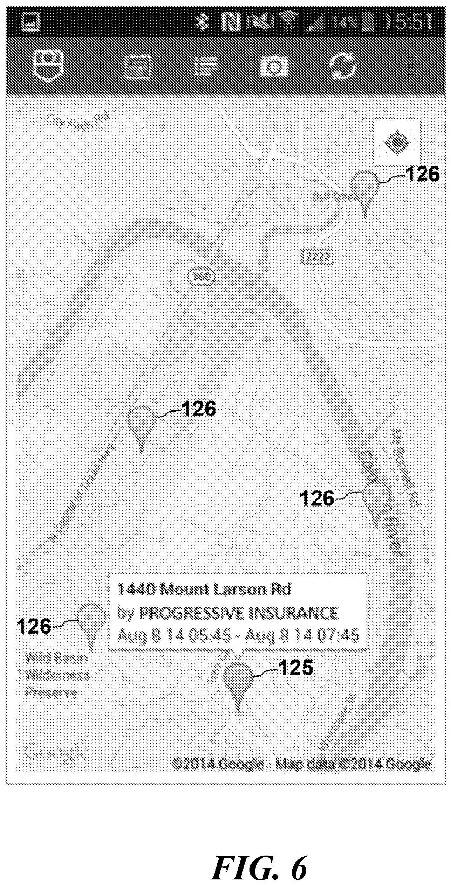

As seen in FIG. 6, selection of a property's location marker **(125** or **126)** displays a balloon **131**, which references (a) the property's physical address, (b) the party that ordered the appraisal, and (c) the length of the appraisal (from start to finish). In some embodiments, other information may be included such as, for example, the amount of the home loan amount being sought or the intended sales price (if either is applicable).

Selection of the property balloon **131** preferably brings the user to the 3xn view **133** of all the thumbnail images for that particular property, as seen in FIG. 7. The 3xn view **133** may become a scrollable (that is, the user may be given the ability to advance through them with a swipe, through selection of a scroll bar, or by other suitable means) 1x1 or 2x2 view if the number of photos taken for a comparable home is four or less (as is often the case with comparables in real estate appraisals).

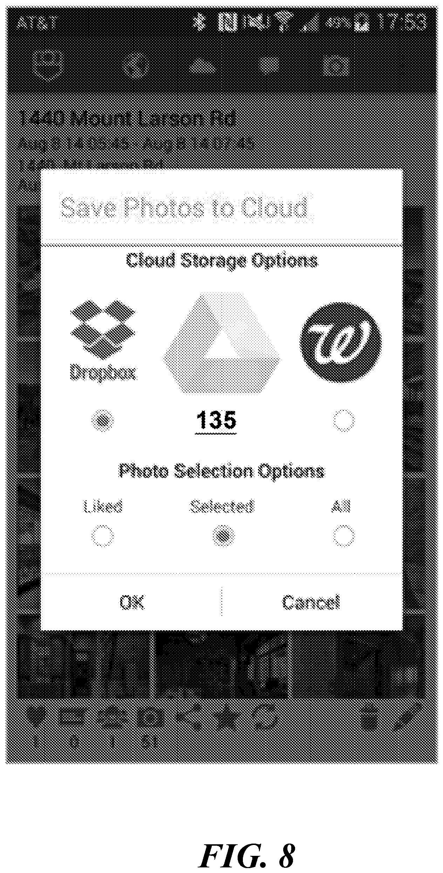

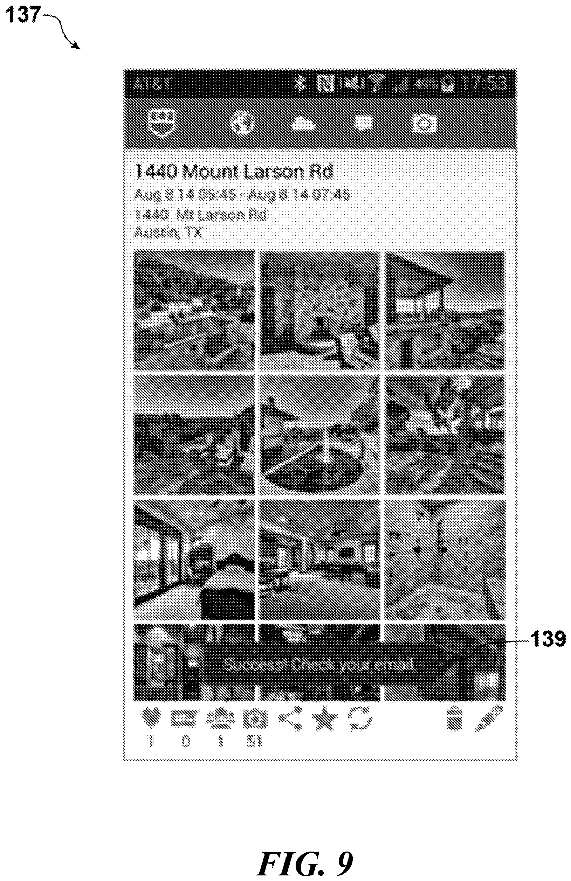

As seen in FIGs. 7-9, the user has the ability to save any or all of the images for the appraisal and its comparables to one of a number of different third-party storage services. For example, in a preferred embodiment, when an image (or images) from the 3xn array of FIG. 7 is long pressed and the cloud icon is simultaneously or subsequently selected, the software launches the dialog box **135** shown in FIG. 8, which presents the user with various cloud storage options. If the "Dropbox" option is selected (e.g., by selecting the corresponding icon), a folder is created entitled "<address of appraisal>", which has sub-folders in the name of the addresses of the individual "comp" properties. As seen in FIG. 9, a pop-up screen **137** is then launched which notes the success of the action and prompts the user with a suitable prompt **139** to check their email (e.g., for the hyperlink to the DropBox file containing the saved images). Of course, one skilled in the art will appreciate that various other file storage, file sharing or file transfer services may be utilized in place of, or in addition to, the Dropbox service.

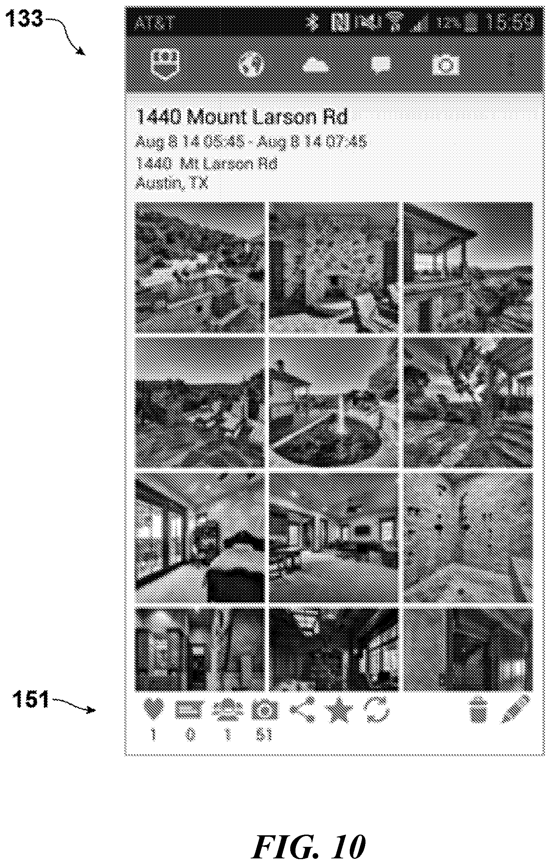

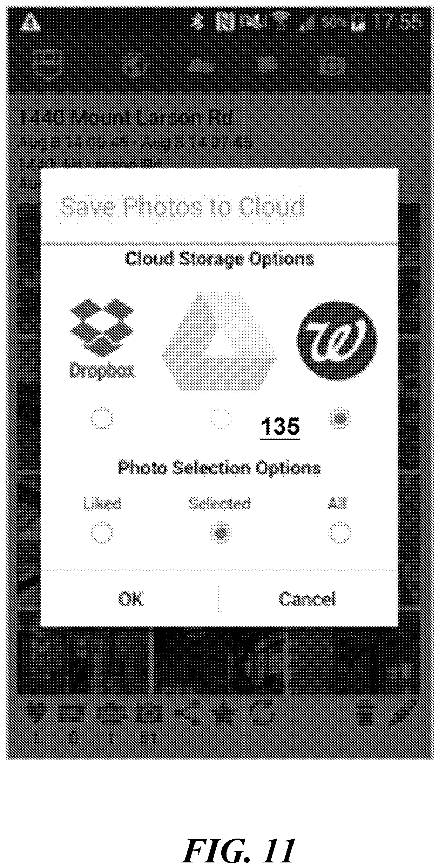

As seen in the sequential screenshots depicted in FIGs. 10-13, the user also has the ability to print any or all of the images for the appraisal and its comparables to a nearby print service from the 3xn view **133.** For example, when an image from the 3xn array **133** of FIG. 7 is selected for printing, the software launches the dialog box **135** shown in FIG. 11 (and identical to that of FIG. 8), which presents the user with print, save or storage options. In a preferred embodiment, and in the case of some of the print services, nearby store locations (such as Walgreens, K-mart or CVS) which offer these services may be displayed, based on their proximity to the user. Since most of these print-on-demand services can fulfill a print order in minutes, a user can quickly reduce a desired number of electronic images to hardcopy if necessary or desired.

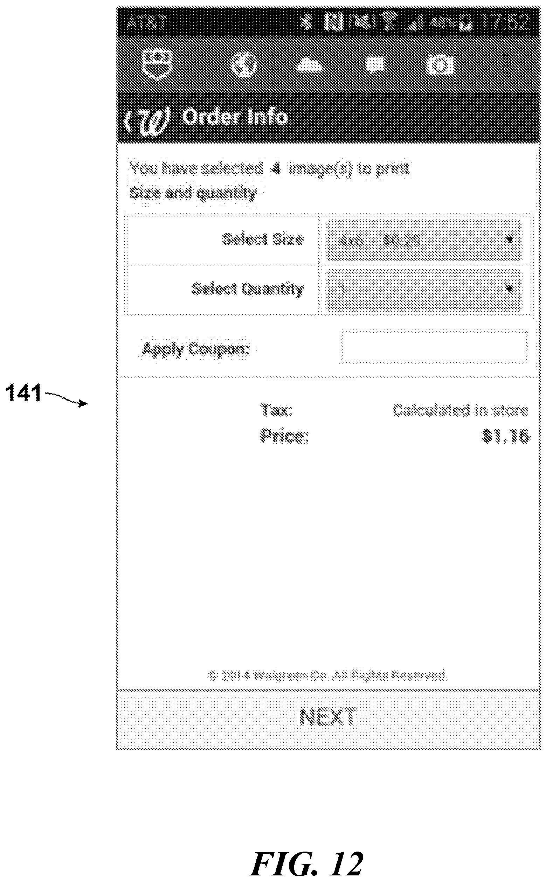

The dialog box **141** of FIG. 12 (which, in the particular embodiment depicted, is a dialog box of an external software program or resource called by the software described herein) provides order options which govern hard copies that are ordered of any images. This dialog box includes, for example, means for selecting photo size and quantity. It also allows the user to apply any applicable coupons to the transaction, and notes the associated cost of the transaction.

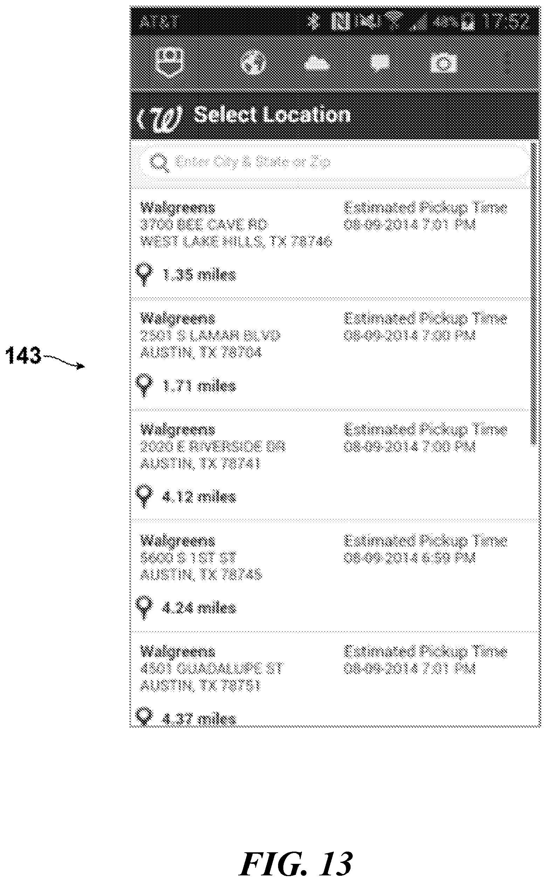

The dialog box **143** of FIG. 13 (which appears after selection of the "Next" tab in FIG. 12) provides a listing of selectable locations at which the printed photos may be picked up. This listing also notes the name and address of each establishment, its distance from the current location of the user, and the estimated time at which the photos will be ready for pickup at that establishment.

Any of the images from the appraised property or its comparables may be viewed in Gallery mode by, for example, selecting its thumbnail in the 3xn view. The user may browse back or forth through the images using navigational techniques as are known to the art including, for example, by swiping across the screen. By utilizing the toolbar **151** at the footer of the Gallery view (see FIG. 10), the user may make notes or comments on any individual photo, or may share an individual photo by email, text, social media, Twitter, FB, g+, or other such services.

The toolbar **151** is preferably customizable, and may include icons to highlight issues such as, for example, safety issues, items in disrepair, a high dollar fixture, appliances or other hardware, and other items which may need to be brought to the attention of the buyer or seller. For example, these tools may be utilized to note something which is out of compliance with applicable codes.

The software, systems and methodologies disclosed herein may also be equipped with a Chat mode. In particular, since all photos are uploaded to the service in real-time, an opportunity exists to provide immediate feedback to the property/home appraiser with regard to the quality of the images and/or completeness of the survey. Preferably, the Chat mode will only work while a user is on-property, or within some distance of the property (e.g., within a geofence associated with the property, or within a certain distance of the geofence), thus making it property-specific. This may minimize mistakes about which home and/or photos are being discussed if an issue or concern arises with regard to any of the photos making up an appraisal.

The software and systems disclosed herein may also be equipped with a "Notifications" icon located in the footer. This icon may be utilized to indicate, for example, whether any notifications have been received with respect to one or more of the images.

The systems and methodologies disclosed herein may be further understood with reference to the following additional particular, non-limiting embodiment and application.

An insurance company wishing to establish the fair market value of a residence for insurance purposes contracts an appraiser local to the residence to conduct an appraisal of the property. The insurance company provides the appraiser with a software application in the form of a software client which is installed on a mobile technology platform (e.g., a mobile phone, laptop or PDA) associated with the appraiser.

The software is equipped with suitable image capture capabilities. As the appraiser captures images, the software records the time at which the image was captured and the GPS coordinates or other temporal or locative data which specifies the time and location at which the image was taken. If the location is a new location (i.e., the software determines that no other images have been taken at that location), the software queries the user for a location identifier (typically a name or physical address) which corresponds to the location at which the images are being taken. If the location is within a predefined distance of the location associated with an existing folder (this distance is typically just large enough to account for normal variances in location determination), the software saves the image to the folder associated with that location.

As a result of the foregoing, the images captured by the appraiser are uploaded in real time to a server which establishes whether or not a captured image can be associated with a particular property. The captured images are properly sorted by location so that, for example, all of the images of the residence are placed in a folder associated therewith, and all of the images of each comparable are likewise placed in a folder associated with the comparable. The software may then upload the sorted images to a server associated with the insurance company. Such uploading may occur at the command of the appraiser (i.e., after the appraiser indicates that image capture is complete), or periodically as a background process.

The above description of the present invention is illustrative, and is not intended to be limiting. It will thus be appreciated that various additions, substitutions and modifications may be made to the above described embodiments without departing from the scope of the present invention. Accordingly, the scope of the present invention should be construed in reference to the appended claims.

## Claims

1. A method for capturing images of an asset, comprising:
providing software, installed on a mobile technology platform associated with a user, which includes image capturing and location awareness functionalities;
receiving, by the mobile technology platform and from the user, a request to capture an image of the asset using the software;
determining the current location of the user with respect to a geofence associated with the asset; and
if the user is within a distance *d* of the geofence associated with the asset, then granting, by the software of the mobile technology platform, the request, and otherwise denying, by the software of the mobile technology platform, the request.

2. The method of claim 1, further comprising performing an appraisal on a target asset by:
obtaining a set of comparable assets to be used as a basis for establishing the appraisal value of the target asset;
repeating, until *n* images have been captured, where *n* ≥ 1, the receiving step, the determining step, and the granting or denying step for the target asset and/or the set of comparable assets; and
using the *n* images to determine an appraisal value of the target asset.

3. The method of claim 2, wherein the target asset is real estate.

4. The method of claim 2 or 3, wherein the *n* images include at least one image of each comparable asset.

5. The method of claim 4, wherein there are at least 3 comparable assets, and no greater than 5 comparable assets.

6. The method of any of claims 2-5, wherein the software renders, on a display associated with the mobile technology platform, a window (101) containing a plurality of icons (107, 109), wherein each of said plurality of icons (107, 109) is associated with one of the target asset and the comparable assets.

7. The method of claim 6, wherein receiving, from the user, a request to capture an image includes selection by the user of one of said plurality of icons (107, 109).

8. The method of claim 6 or 7, further comprising:
associating each captured image with the most recent of said plurality of icons (107, 109) selected by the user, and
after an image is captured, replacing the icon associated with the image with a thumbnail version of the image.

9. The method of claim 7 or 8, further comprising:
placing each captured image in a folder associated with the target asset.

10. The method of any of the preceding claims, wherein determining the current location of the user with respect to a geofence associated with the asset includes determining the GPS coordinates of the mobile technology platform associated with the user.

11. The method of any of the preceding claims, further comprising:
associating locative and temporal data with each captured image which specifies, respectively, the location and time at which the image was captured, and
recording the locative and temporal data in metadata associated with the captured image.

12. The method of any of the preceding claims further comprising validating an image as corresponding to an asset by:
obtaining an image for each member of a set *of N* assets, where *N* ≥ 1 , and wherein, for the *k*^{th} asset, where *k* ε *N,* the image of the *k*^{th} asset has a *k*^{th} dataset associated therewith which includes locative data specifying the location of the *k*^{th} asset; and
for at least one asset *A*ᵢ ε {*A*ᵢ,...., *A*_{N}}, validating the image of the asset by:
determining the location of the *i*^{th} asset by ascertaining the geospatial coordinates of a physical address associated with the *i*^{th} asset,
comparing the determined location of said *i*^{th} asset to the locative data specified for the *i*^{th} asset in the *i*^{th} dataset, and
if the determined location of the *i*^{th} asset is within a predefined distance of the location specified for the *i*^{th} asset in the *i*^{th} dataset, then marking the image of the *i*^{th} asset as validated, and otherwise flagging the image as being potentially invalid.

13. The method of claim 12, further comprising performing the step of validating the image for each asset *A*ᵢ ε {*A*ᵢ,...., *A*_{N}}.

14. The method of claim 12 or 13, wherein ascertaining the geospatial coordinates of a physical address associated with the *i*^{th} asset includes ascertaining the GPS coordinates of the *i*^{th} asset.

15. The method of claim 12, 13 or 14, wherein at least one member of the set of *N* assets is the target asset which is the subject of the appraisal or a comparable asset which is used to ascertain the value of the target asset.

## Patentansprüche

1. Verfahren zum Erfassen von Bildern eines Assets, das umfasst:
Bereitstellen von Software, die auf einer mobilen Technologieplattform installiert ist, die einem Benutzer zugeordnet ist, die Bildaufnahme- und Standorterkennungsfunktionen umfasst;
Empfangen einer Anfrage von der mobilen Technologieplattform und vom Benutzer, um ein Bild des Assets durch Verwenden der Software aufzunehmen;
Bestimmen des aktuellen Standorts des Benutzers in Bezug auf einen Geofence, der dem Asset zugeordnet ist; und
wenn sich der Benutzer innerhalb einer Distanz *d* des Geofences, der dem Asset zugeordnet ist, befindet, dann Genehmigen der Anfrage durch die Software der mobilen Technologieplattform, und andernfalls Ablehnen der Anfrage durch die Software der mobilen Technologieplattform.

2. Verfahren nach Anspruch 1, das ferner Durchführen einer Bewertung eines Zielassets durch folgendes umfasst:
Erhalten eines Satzes vergleichbarer Assets, die als Grundlage zum Ermitteln des Schätzwerts des Zielassets dienen;
Wiederholen des Empfangsschritts, des Bestimmungsschritts und des Erteilungs- oder Ablehnungsschritts für das Zielasset und/oder den Satz von vergleichbaren Assets, bis *n* Bilder aufgenommen wurden, wobei *n* ≥ 1 ist; und
Verwenden der *n* Bilder, um einen Schätzwert des Zielassets zu bestimmen.

3. Verfahren nach Anspruch 2, wobei das Zielasset eine Immobilie ist.

4. Verfahren nach Anspruch 2 oder 3, wobei die *n* Bilder mindestens ein Bild von jedem vergleichbaren Asset umfassen.

5. Verfahren nach Anspruch 4, wobei mindestens 3 vergleichbare Assets und nicht mehr als 5 vergleichbare Assets vorhanden sind.

6. Verfahren nach einem der Ansprüche 2 bis 5, wobei die Software (101) auf einer Anzeige, die der mobilen Technologieplattform zugeordnet ist, ein Fenster wiedergibt, das eine Vielzahl von Symbolen (107, 109) enthält, wobei jedes der Vielzahl von Symbolen (107, 109) einem von dem Zielasset und den vergleichbaren Assets zugeordnet ist.

7. Verfahren nach Anspruch 6, wobei das Empfangen einer Anfrage vom Benutzer, um ein Bild aufzunehmen, Auswahl eines der Vielzahl von Symbolen (107, 109) durch den Benutzer umfasst.

8. Verfahren nach Anspruch 6 oder 7, das ferner umfasst:
Zuordnen jedes aufgenommenen Bildes zu dem Neuesten der Vielzahl von Symbolen (107, 109), die durch den Benutzer ausgewählt wurden, und
nachdem ein Bild aufgenommen wurde, Ersetzen des Symbols, das dem Bild zugeordnet ist, durch eine Miniaturansicht des Bildes.

9. Verfahren nach Anspruch 7 oder 8, das ferner umfasst:
Platzieren jedes aufgenommenen Bildes in einen Ordner, der dem Zielasset zugeordnet ist.

10. Verfahren nach einem der vorhergehenden Ansprüche, wobei das Bestimmen des aktuellen Standorts des Benutzers in Bezug auf einen Geofence, der dem Asset zugeordnet ist, ein Bestimmen der GPS Koordinaten der mobilen Technologieplattform, die dem Benutzer zugeordnet ist, umfasst.

11. Verfahren nach einem der vorhergehenden Ansprüche, das ferner umfasst:
Zuordnen von Orts- und Zeitdaten zu jedem aufgenommen Bild, die jeweils den Ort und die Zeit angeben, zu der das Bild aufgenommen wurde, und
Aufzeichnen der Orts- und Zeitdaten in Metadaten, die dem erfassten Bild zugeordnet sind.

12. Verfahren nach einem der vorhergehenden Ansprüche, das ferner ein Validieren eines Bildes als einem Assets entsprechend durch folgendes umfasst:
Beschaffen eines Bildes für jedes Elements eines Satzes von *N* Assets, wobei *N* ≥ 1, und wobei für das k-te Asset, wobei k ε N ist, dem Bild des k-ten Assets ein k-ter Datensatz zugeordnet ist, der Ortsdaten enthält, die den Ort des k-ten Assets angeben; und
Validieren des Bildes des Assets für mindestens ein Asset *A*ᵢ ε {*Aᵢ,....,A*_{N}} durch:
Bestimmen des Standortes des i-ten Assets durch Ermitteln der Geokoordinaten einer physischen Adresse, die dem i-ten Asset zugeordnet ist,
Vergleichen des ermittelten Standortes des i-ten Assets mit den Ortsdaten, die für das i-te Asset im i-ten Datensatz angegeben sind,
wenn sich der ermittelte Standort des i-ten Assets innerhalb einer vordefinierten Distanz zum Standort, der für das i-te Asset in dem i-ten Datensatz angegeben ist, befindet, dann Markieren des Bildes des i-ten Assets als validiert, und andernfalls Kennzeichnen des Bildes als möglicherweise ungültig.

13. Verfahren nach Anspruch 12, das ferner ein Durchführen des Schritts des Validierens des Bildes für jedes Asset *A*ᵢ ε {*A*ᵢ,...., *A*_{N}} umfasst.

14. Verfahren nach Anspruch 12 oder 13, wobei das Ermitteln der Geokoordinaten einer physischen Adresse, die dem i-ten Asset zugeordnet ist, ein Ermitteln der GPS Koordinaten des i-ten Assets umfasst.

15. Verfahren nach Anspruch 12, 13 oder 14, wobei mindestens ein Element des Satzes von *N* Assets das Zielasset ist, das Gegenstand der Bewertung ist, oder ein vergleichbares Asset ist, das verwendet wird, um den Wert des Zielassets zu ermitteln.

## Revendications

1. Procédé pour capturer des images d'un actif, comprenant :
la fourniture d'un logiciel, qui est installé sur une plate-forme de technologie mobile qui est associée à un utilisateur, lequel logiciel inclut des fonctionnalités de capture d'image et de reconnaissance de localisation ;
la réception, par la plate-forme de technologie mobile et en provenance de l'utilisateur, d'une requête demandant de capturer une image de l'actif en utilisant le logiciel ;
la détermination de la localisation courante de l'utilisateur par rapport à un géorepérage qui est associé à l'actif ; et
si l'utilisateur est à l'intérieur d'une distance *d* du géorepérage qui est associé à l'actif, alors la satisfaction, par le logiciel de la plate-forme de technologie mobile, de la requête et sinon, le rejet, par le logiciel de la plate-forme de technologie mobile, de la requête.

2. Procédé selon la revendication 1, comprenant en outre la réalisation d'une estimation portant sur un actif cible en réalisant les actions qui suivent :
l'obtention d'un jeu d'actifs comparables à utiliser en tant que base pour établir la valeur d'estimation de l'actif cible ;
la répétition, jusqu'à ce que *n* images aient été capturées, où *n* ≥ 1, de l'étape de réception, de l'étape de détermination et de l'étape de satisfaction ou de rejet pour l'actif cible et/ou le jeu d'actifs comparables ; et
l'utilisation des *n* images pour déterminer une valeur d'estimation de l'actif cible.

3. Procédé selon la revendication 2, dans lequel l'actif cible est un bien immobilier.

4. Procédé selon la revendication 2 ou 3, dans lequel les *n* images incluent au moins une image de chaque actif comparable.

5. Procédé selon la revendication 4, dans lequel il y a au moins 3 actifs comparables et pas plus de 5 actifs comparables.

6. Procédé selon l'une quelconque des revendications 2 à 5, dans lequel le logiciel réalise un rendu, sur un affichage qui est associé à la plate-forme de technologie mobile, d'une fenêtre (101) qui contient une pluralité d'icônes (107, 109), dans lequel chacune de ladite pluralité d'icônes (107, 109) est associée à un actif pris parmi l'actif cible et les actifs comparables.

7. Procédé selon la revendication 6, dans lequel la réception, en provenance de l'utilisateur, d'une requête demandant de capturer une image inclut la sélection par l'utilisateur de l'une de ladite pluralité d'icônes (107, 109).

8. Procédé selon la revendication 6 ou 7, comprenant en outre :
l'association de chaque image capturée avec la plus récente de ladite pluralité d'icônes (107, 109) qui sont sélectionnées par l'utilisateur ; et
après qu'une image est capturée, le remplacement de l'icône qui est associée à l'image par une version de dimension réduite de l'image.

9. Procédé selon la revendication 7 ou 8, comprenant en outre :
le classement de chaque image capturée dans un dossier qui est associé à l'actif cible.

10. Procédé selon l'une quelconque des revendications précédentes, dans lequel la détermination de la localisation courante de l'utilisateur par rapport à un géorepérage qui est associé à l'actif inclut la détermination des coordonnées GPS de la plate-forme de technologie mobile qui est associée à l'utilisateur.

11. Procédé selon l'une quelconque des revendications précédentes, comprenant en outre :
l'association de données de localisation et temporelles à chaque image capturée, lesquelles données spécifient, de façon respective, la localisation et l'instant auxquels l'image a été capturée ; et
l'enregistrement des données de localisation et temporelles selon des métadonnées qui sont associées à l'image capturée.

12. Procédé selon l'une quelconque des revendications précédentes, comprenant en outre la validation d'une image comme correspondant à un actif en réalisant les actions qui suivent :
l'obtention d'une image pour chaque membre d'un jeu de *N* actifs, où *N* ≥ 1, et dans lequel, pour le *k*-ième actif, où *k* ε *N*, l'image du *k*-ième actif dispose d'un *k*-ième jeu de données qui lui est associé, lequel jeu inclut des données de localisation qui spécifient la localisation du *k*-ième actif ; et
pour au moins un actif *Aᵢ* ε {*Aᵢ,* ..., *A*_{N}}, la validation de l'image de l'actif en réalisant les actions qui suivent :
la détermination de la localisation de l'*i*-ème actif en évaluant les coordonnées géospatiales d'une adresse physique qui est associée à l'*i*-ème actif ;
la comparaison de la localisation déterminée dudit *i*-ème actif avec les données de localisation qui sont spécifiées pour le *i*-ème actif dans le *i*-ème jeu de données ; et
si la localisation déterminée de l'*i*-ème actif est à l'intérieur d'une distance prédéfinie de la localisation qui est spécifiée pour le *i*-ème actif dans le *i*-ème jeu de données, alors l'identification par repérage de l'image de l'*i*-ème actif comme étant validée et sinon, la signalisation par repérage de l'image comme étant potentiellement invalide.

13. Procédé selon la revendication 12, comprenant en outre la réalisation de l'étape de validation de l'image pour chaque actif *Aᵢ* ε {*Aᵢ,* ..., *A_{N}*}*.*

14. Procédé selon la revendication 12 ou 13, dans lequel l'évaluation des coordonnées géospatiales d'une adresse physique qui est associée à l'*i-*ème actif inclut l'évaluation des coordonnées GPS de l'*i*-ème actif.

15. Procédé selon la revendication 12, 13 ou 14, dans lequel au moins un membre du jeu de N actifs est l'actif cible qui fait l'objet de l'estimation ou un actif comparable qui est utilisé pour évaluer la valeur de l'actif cible.
